# EUROPEAN PATENT SPECIFICATION

(11) **EP 3 903 471 B1**
(45) Date of publication and mention of the grant of the patent: **04.09.2024**
(21) Application number: 19911274.9
(22) Date of filing: 21.01.2019
(51) Int. Cl.: H04L 41/0894, H04L 67/1001, H04L 9/40, H04L 41/0893, H04L 41/14, H04L 41/40

(54) **DETERMINING SPANS FOR NETWORK CONFIGURATION DEPENDENCIES**
BESTIMMUNG VON SPANNEN FÜR NETZWERKKONFIGURATIONSABHÄNGIGKEITEN
DÉTERMINATION DE PORTÉES RELATIVES À DES DÉPENDANCES DE CONFIGURATION DE RÉSEAU

(43) Date of publication of application: 03.11.2021
(73) Proprietor: VMware LLC, Palo Alto, CA 94304 (US)
(72) Inventor: LIN, Yanjun, Palo Alto, California 94304 (US); WAN, Da, Beijing 100190 (CN); GUO, Wei, Palo Alto, California 94304 (US); PING, Yang, Palo Alto, California 94304 (US)
(74) Representative: Dilg, Haeusler, Schindelmann Patentanwaltsgesellschaft mbH
(86) International application number: PCT/CN2019/072493
(87) International publication number: WO 2020/150856

(56) References cited:
- CN-A- 104 283 788
- CN-A- 105 592 124
- US-A1- 2007 058 607
- US-A1- 2013 272 133
- US-A1- 2017 005 986
- US-A1- 2017 220 697
- US-A1- 2017 222 873
- US-A1- 2018 062 953
- US-A1- 2018 123 877

## Description

### BACKGROUND

Software-defined networking often uses network controllers to configure logical networks. Network controllers may include central controllers and local controllers. A central controller may be configured to receive, from a management plane, configuration instructions that specify network configuration dependencies to be implemented in a network. The configuration dependencies may be specified as, for example, firewall rules, service insertion requests, load balancing requests, IPSec requests, or VPN session requests. Upon receiving the configuration instructions, the central controller processes the instructions, forms configuration messages indicating how the instructions are to be implemented in host computers and transmits the configuration messages to local controllers implemented in the hosts for execution.

A central controller may receive configuration instructions specifying, for example, a distributed firewall rule. The rule may state that a particular host needs to monitor and control incoming and outgoing network traffic and block the traffic transmitted from a particular source to a particular destination. The identifications of the particular host, the particular source and the particular destination are called rule components and may be encoded in the instructions using software-based constructs.

A construct is a data structure created for a component of a rule and is used to store data associated with the component. Examples of constructs include an AppliedTo construct, a Source construct, and a Destination construct. An AppliedTo construct may be used to store, for example, information about a particular host that needs to monitor the traffic defined in the rule. A Source construct may be used to store information about a particular source defined in the rule. A Destination construct may be used to store information about a particular destination defined in the rule. Details of an example application of an AppliedTo construct is described in U.S. Patent 9,215,214, entitled "Provisioning Firewall Rules on a Firewall Enforcing Device".

A construct may be associated with one or more groups of entities. Examples of entities include hosts, virtual machines ("VMs"), IP addresses and/or MAC addresses to which the construct applies. Groups of the entities are called GroupingObjects.

A GroupingObject is a data structure that is used to store identifiers of the entities that belong to the GroupingObject. For example, if a firewall rule specifies that a host1 needs to monitor traffic, then the configuration instructions may include a GroupingObject1 that is associated with an AppliedTo construct and that includes an identifier of the host1. If the rule specifies that traffic transmitted from an IPaddress1 and an IPaddress2 needs to be blocked, then the configuration instructions may include a GroupingObject2 that is associated with a Source construct and that includes the IPaddress1 and the IPaddress2. If the rule specifies that traffic transmitted to a VM3 and a VM4 needs to be blocked, then the configuration instructions may include a GroupingObject3 that is associated with a Destination construct and that includes identifiers of the VM3 and the VM4.

Based on the configuration instructions, the central control plane may generate configuration messages that include the rules and the GroupingObjects and may transmit the messages to the hosts that need to configure the rules and the GroupingObjects on the hosts. A set of hosts to which the configuration messages need to be transmitted is referred to as a span.

Determining the spans is, however, difficult, and the difficulty is usually proportional to the complexity of the rules and the interdependencies between the rules and between the GroupingObjects. Typically, a central controller generates tree graphs for individual rules, and merges the graphs into a resulting graph, also called a span graph. The span graph may include an enormous count of nodes and links that connect the nodes and represent dependencies between the nodes. Traversing such a span graph to determine the spans for the individual rules and for the individual GroupingObjects places large demands on the memory and CPU resources.

Relevant prior art is provided by the US patent application US-A-2017/220697, which describes a method of determining the span of logical entities in a network. The method generates a directed graph, where each node of the graph corresponds to a logical network entity. Each edge of the graph has one or two directions and a direction from a first node to a second node identifies the first node as the source of span for the second node. The method determines the span of each node based on the direction of the edges of the directed graph by grouping each set of nodes that are accessible by all other nodes in the set in a strongly connected group (SCC) sub-graph, generating a group node in a directed acyclic graph (DAG) to correspond to each SCC sub-graph in the directed graph, and assigning the span of each SCC to the corresponding group node of the DAG.

### SUMMARY

The invention is defined in the independent claims. Further embodiments are set out in the appended dependent claims.

In an embodiment, a computer-implemented approach allows determining spans for configuration dependencies in computer networks. A span usually includes a set of hosts to which a central controller needs to send configuration messages to allow the hosts to configure the network dependencies, such as firewall rules, service insertion functionalities, load balancing services, IPSec services, and/or VPN session services. Throughout the disclosure, the approach is described primarily in reference to implementations for distributed firewall rules; however, the approach is also applicable to load balancing and other services.

The computer-implemented approach allows determining the spans effectively, efficiently, automatically, and without imposing significant demands on the memory and CPU resources. The approach allows determining the spans to include in the spans only those hosts that need to receive configuration messages from a central controller, and not including other hosts in the spans. Therefore, the approach prevents transmitting the configuration messages to the hosts that do not need to receive the messages. This in turn allows to minimize the impact that sending the configuration messages via a network may have on the network bandwidth and traffic.

The approach for determining spans for network configuration dependencies may be implemented in a central controller, also referred to as a central control plane, or any other network component configured to control network configurations. Upon receiving configuration instructions from a management plane, the central controller uses the instructions to generate a tree graph, also called a span graph, that includes nodes and directed links. The nodes may represent rules, constructs, objects, VMs, hosts, IP addresses, MAC addresses, and the like. Examples of the nodes include constructs, such as AppliedTo constructs, Source constructs, Destination constructs; GroupingObjects, such as a GroupingObject1, a GroupingObject2, and a GroupingObject3, and others. The directed links in the graph connect the nodes and capture the configuration dependencies between the components specified in the configuration instructions.

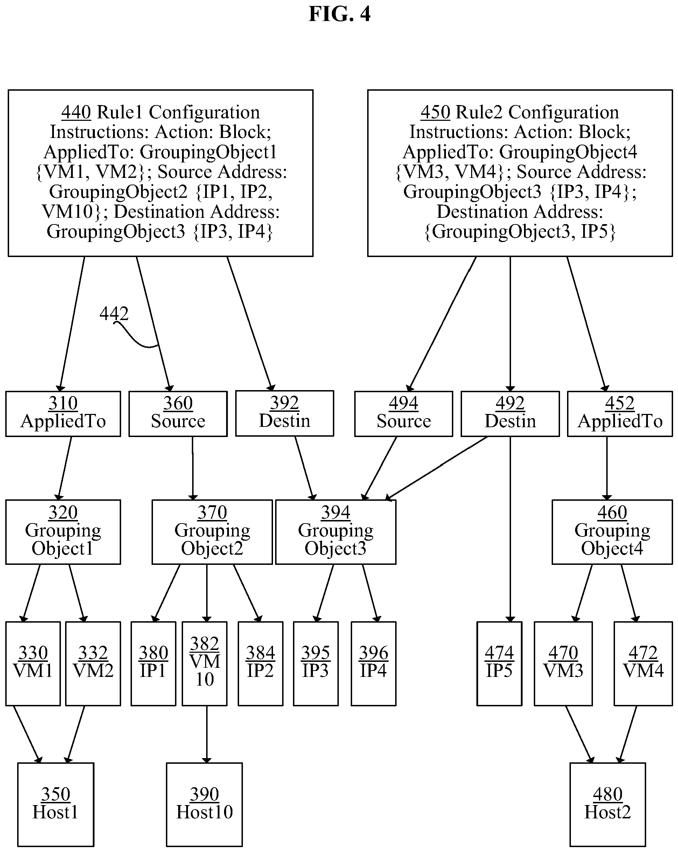

In an embodiment, an approach for determining spans for network configuration dependencies includes inspecting a span graph, determining and adding new directed links to the graph to generate a modified span graph, pruning some of the old directed links in the modified graph, pruning some of the nodes in the modified graph, determining initial spans for certain nodes in the modified graph, and further processing the modified graph to determine real spans for the nodes in the modified graph. An example process is described in detail in FIG. 4-9.

Once the real spans for the certain nodes in the modified graph are determined, the central controller generates configuration messages that capture the network configuration dependencies derived from the configuration instructions received by the central controller and transmits the configuration messages to the hosts identified in the real spans.

Also described herein are embodiments of a computer system executing software applications that are programmed to implement the above-described method for determining spans for network configuration dependencies.

Also described herein are embodiments of a non-transitory computer readable storage medium comprising instructions which, when executed by one or more computer processors, cause the one or more processors to perform the above-described method for determining spans for network configuration dependencies.

### BRIEF DESCRIPTION OF THE DRAWINGS

In the drawings:
FIG. 1 is a block diagram depicting an example physical implementation view of an example logical network environment for determining spans for network configuration dependencies.
FIG. 2 is a block diagram depicting examples of grouping objects.
FIG. 3 is a block diagram depicting an example tree graph.
FIG. 4 is a block diagram depicting an example tree graph representing two rules.
FIG. 5 is a block diagram depicting one of the steps of an example process executed to determine spans for configuration dependencies.
FIG. 6 is a block diagram depicting one of the steps of an example process executed to determine spans for configuration dependencies.
FIG. 7 is a block diagram depicting one of the steps of an example process executed to determine spans for configuration dependencies.
FIG. 8A is a block diagram depicting an example initial span table.
FIG. 8B is a block diagram depicting an example real span table.
FIG. 9 is example flow chart for implementing the process of determining spans for configuration dependencies.
FIG. 10 is a block diagram depicting a modified example tree graph.
FIG. 11 is a block diagram depicting one of the steps of an example process executed to determine spans for configuration dependencies.
FIG. 12 is a block diagram depicting one of the steps of an example process executed to determine spans for configuration dependencies.
FIG. 13 is a block diagram depicting one of the steps of an example process executed to determine spans for configuration dependencies.
FIG. 14 is a block diagram depicting an example initial span table.
FIG. 15 is a block diagram depicting an example real span table.

### DETAILED DESCRIPTION

In the following description, for the purposes of explanation, numerous specific details are set forth in order to provide a thorough understanding of the method described herein. It will be apparent, however, that the present approach may be practiced without these specific details. In some instances, well-known structures and devices are shown in a block diagram form to avoid unnecessarily obscuring the present approach.

### 1. EXAMPLE PHYSICAL IMPLEMENTATIONS

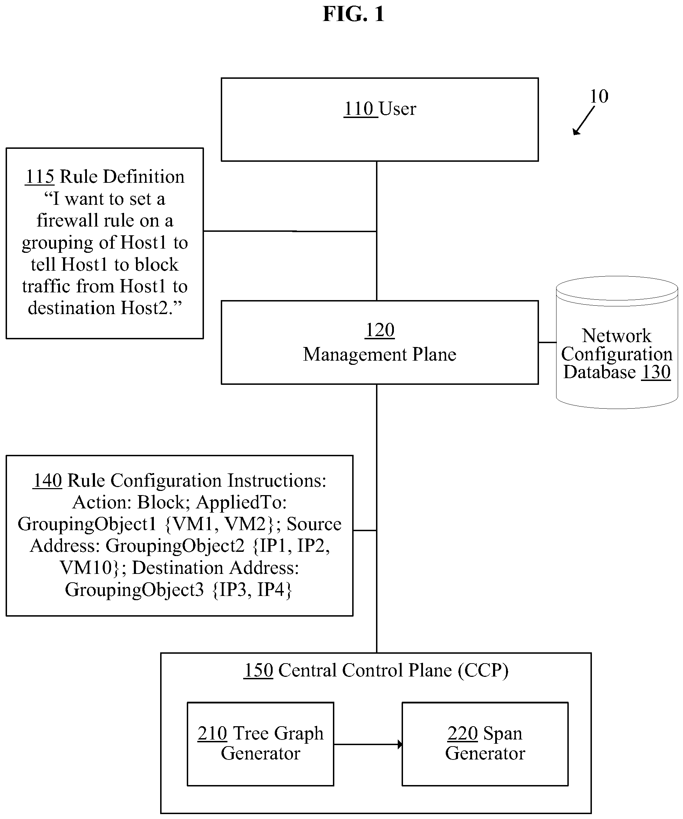

FIG. 1 is a block diagram depicting an example physical implementation view of an example logical network environment for determining spans for network configuration dependencies. In the depicted example, environment 10 includes a management plane 120, a central control plane 150 and a network configuration database 130. In an embodiment, management plane 120 and central control plane 150 may be implemented as distributed or clustered systems.

Management plane 120 is a software application which, when executed, is used to manage and monitor network services configured on entities of the network. Management plane 120 may be configured to, for example, receive configuration requests from users, and process the requests to generate configuration instructions. Management plane 120 may also be configured to send the configuration instructions to central control plane 150 to instruct plane 150 to generate, based on the instructions, configuration messages for implementing the configuration requests on host computers in the network. Management plane 120 may store the requests and the configuration instructions in one or more network configuration databases 130.

In the depicted example, user 110 generates a configuration request to implement a distributed firewall rule 115. The request may state that rule 115 needs to be implemented, for example, on a host1, and that traffic transmitted from the host1 to a host2 needs to be blocked.

Based on rule 115, management plane 120 may create constructs and GroupingObjects that correspond to components of rule 115. For example, management plane 120 may create an AppliedTo construct, a Source construct, a Destination construct, a GroupingObject1, a GroupingObject2, and a GroupingObject3. The AppliedTo construct may be associated with the GroupingObject1 which may include identifiers of a VM1 and a VM2. The Source construct may be associated with the GroupingObject2 which may include an IPaddress1, an IPaddress2, and an identifier of a VM10. The Destination construct may be associated with the GroupingObject3 which may include an IPaddress3 and an IPaddress4. Management plane 120 may create and associate additional objects which may include identifiers of other VMs, IP addresses and/or MAC addresses. Management plane 120 includes the constructs and the GroupingObject in rule configuration instructions 140 and transmits instructions 140 to central controller 150.

Upon receiving rule configuration instructions 140, central controller 150 parses the instructions, generates a tree graph based on the instructions, determines spans for rule 115 and spans the GroupingObjects identified in configuration instructions, generates configuration messages containing constructs and the GroupingObjects and transmits the configuration messages to hosts included in the corresponding spans to request that local control planes implemented on the hosts configure rule 115 on the hosts.

### 2. EXAMPLES OF GROUPING OBJECTS

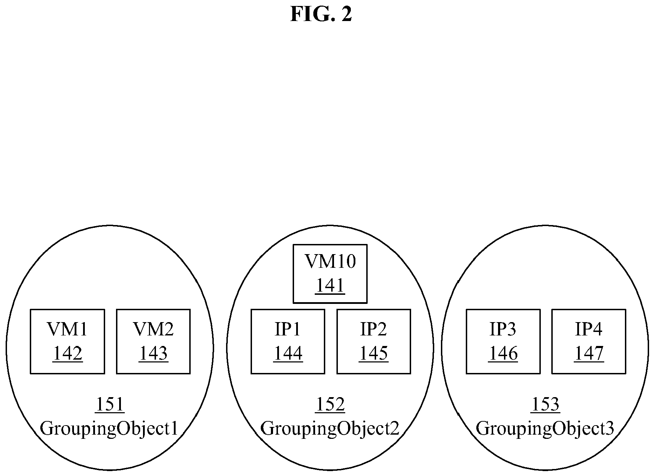

FIG. 2 is a block diagram depicting examples of grouping objects. In the depicted example, GroupingObjects correspond to components that management plane 120 determined for rule 115. In other examples, GroupingObjects may include additional and/or other elements.

Generally, a GroupingObject defined for a rule may include IP addresses, MAC addresses and/or identifiers of the virtual machines to which the rule applies. In the depicted example, a GroupingObject1 151 was generated for an AppliedTo construct of rule 115 and includes an identifier 142 of a VM1 and an identifier 143 of a VM2. A GroupingObject2 152 was created for a Source construct, and includes an IPaddress1 144, an IPaddress2 145, and an identifier 141 of a VM10. A GroupingObject3 152 was created for a Destination construct and includes an IPaddress3 146 and an IPaddress4 147.

### 3. EXAMPLE SPAN GRAPH REPRESENTING A RULE

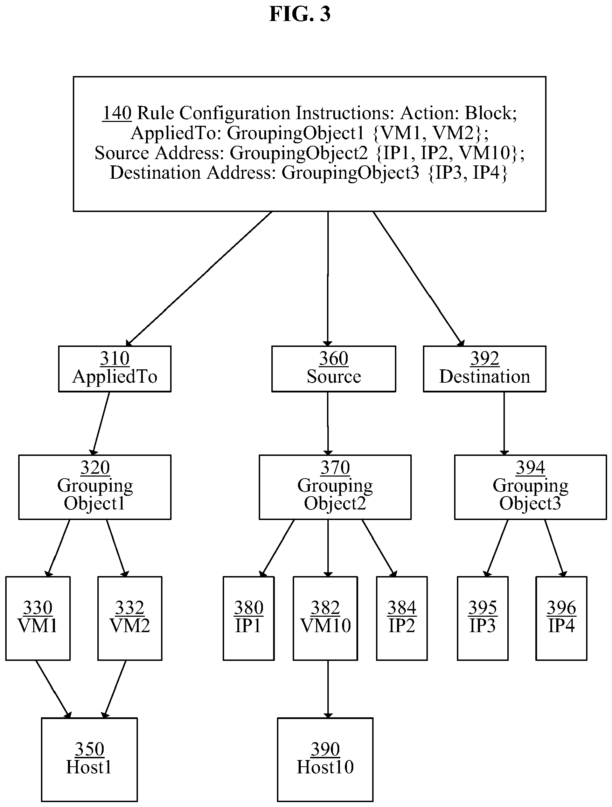

FIG. 3 is a block diagram depicting an example tree graph. Suppose that a central controller received configuration instructions for configuring a firewall Rule 140 to block traffic from a particular source to a particular destination. The instructions may include an AppliedTo construct indicating that Rule 140 is to be implemented on a VM1 and a VM2 that belong to a GroupingObject1. The instructions may also include a Source construct indicating that Rule 140 is to be implemented to block traffic that is transmitted from a VM10, an IPaddress1 and an IPaddress2 that belong to a GroupingObject2. The instructions may also include a Destination construct indicating that Rule 140 is to be implemented to block traffic that is transmitted to an IPaddress3 and an IPaddress4 that belong to a GroupingObject3.

The depicted tree graph includes a root node that corresponds to Rule 140. The root node is connected to construct nodes that include an AppliedTo node 310, a Source node 360, and a Destination node 392. AppliedTo node 310 is a parent node for a GroupingObject1 node 320, which is a parent node for two nodes: a VM1 node 330 and a VM2 node 332. The VM nodes are connected to a host1 node 350, which corresponds to a host1 on which the VM1 and the VM2 are implemented.

Source node 360 is a parent node for a GroupingObject2 node 370, which is a parent node for an IP1 node 380, a VM10 node 382, and an IP2 node 384. Nodes 380, 382 and 384 are connected to a host10 node 390, which corresponds to a host10 on which the IPaddress1, the VM10, and the IPaddress2 are implemented.

Destination node 392 is a parent node for a GroupingObject3 node 394, which is a parent node for an IP3 node 395, and an IP4 node 396. IP3 node 395 corresponds to the IPaddress3 and IP4 node 396 corresponds to the IPaddress4.

In the depicted example, rule node 140 is referred to as a first-type node, nodes AppliedTo 310, Source 360 and Destination 392 are referred to as second-type nodes, and GroupingObject nodes 320, 370 and 394 are referred to as third-type nodes. The nodes are connected using directed links that are also referred to as first-type links.

### 4. EXAMPLE SPAN GRAPH REPRESENTING MULTIPLE RULES

FIG. 4 is a block diagram depicting an example tree graph representing two rules. The depicted graph is used to describe clear examples; however, span graphs may be generated for any count of rules.

The depicted graph shows two nodes: a Rule1 node 440 and a Rule2 node 450. Rulel node 440 includes a description that states that an action is "block;" that the rule applies to a GroupingObject1, which includes a VM1 and a VM2; that a source for the rule is defined using a GroupingObject2, which includes an IPaddress1, an IPaddress2 and a VM10; and that a destination for the rule is defined using a GroupingObject3, which includes an IPaddress3 and an IPaddress4. The tree graph corresponding to the Rule1 is described in detail in FIG. 3.

A tree branch rooted at AppliedTo node 310 includes only one node that corresponds to a host; it is a host1 node 350. Host1 node 350 is the only host that belongs to the AppliedTo branch rooted at AppliedTo node 310. Therefore, the span of the Rule1 is {host1}. That means that a Rule1 configuration message needs to be sent to the host1.

Rule2 node 450 includes a description that states that an action is "block;" that the rule applies to a GroupingObject4, which includes a VM3 and a VM4; that a source for the rule is defined using a GroupingObject3, which includes the IPaddress3 and the IPaddress4; and that a destination for the rule includes the GroupingObject 3 and an IPaddress5. Note that Destination constructs for rules, as well as Source constructs and AppliedTo constructs for rules, need not be defined using GroupingObjects; instead, they may include IP addresses, MAC addresses and/or identifiers of VMs.

Rule2 node 450 is a parent node of an AppliedTo node 452, a source node 494 and a destination node 492. The branch rooted at AppliedTo node 452 includes a GroupingObject4 node 460, which in turn includes a VM3 node 470 and a VM4 node 472. Source node 494 is a parent node for GroupingObject3 node 394. Destination node 492 is a parent node for GroupingObject3 394 and an IP5 node 474. GroupingObject3 node 394 is a parent node for IPaddress3 node 395 and IPaddress4 node 396.

A tree branch rooted at AppliedTo node 452 includes only one node that corresponds to a host; it is a host2 node 480. Host2 node 480 is the only host that belongs to the AppliedTo branch rooted at AppliedTo node 452. Therefore, the span of the Rule2 is {host2}. That means that a Rule2 configuration message needs to be sent to the host2.

While determining real spans just for rules and just for simple graphs may be easy, determining real spans for rules and GroupingObjects of complex graphs with many rules and many GroupingObjects may be difficult. The approach described below allows determining real spans for all types of graphs and objects.

### 5. DETERMINING SPANS FROM A SPAN GRAPH

In an embodiment, an automated process for determining real spans for network configuration dependencies starts when a central controller receives configuration instructions from a management plane. Upon receiving the instructions, the central control plane invokes a tree graph generator to generate a span graph having nodes and links representing configuration dependencies defined in the configuration instructions. An example of a span graph is depicted in FIG. 4.

In an embodiment, the nodes in the span graph include one or more first-type nodes, one or more second-type nodes, one or more third-type nodes, and optionally, other types of nodes. If the graph represents, for example, distributed firewall rules, then the first-type nodes correspond to rule nodes; the second-type nodes correspond to AppliedTo nodes, Source nodes, and Destination nodes; and the third-type nodes correspond to GroupingObject nodes.

In an embodiment, the links in the span graph generated by the central controller based on the configuration instructions are directed links and are referred to as a first-type links. The first-type links represent network configuration dependencies to be configured in the computer network. The first-type links may be depicted using solid-line arrows, such as a first-type link 442 in FIG. 4.

### 5.1. ADDING SECOND-TYPE LINKS TO A SPAN GRAPH

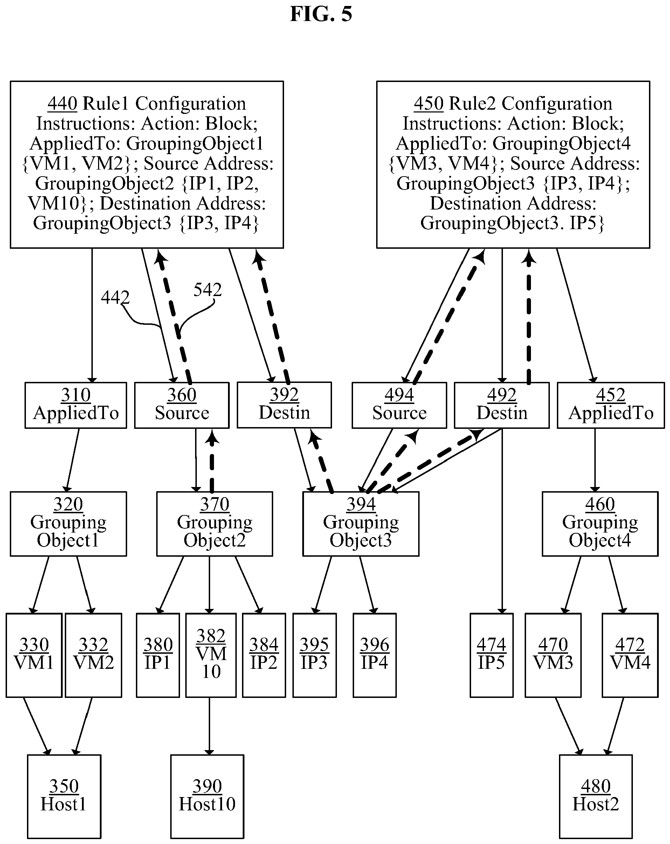

FIG. 5 is a block diagram depicting one of the steps of an example process executed to determine spans for configuration dependencies. In this step, a central controller determines, for a span graph, a plurality of second-type links for a subset of the nodes in the graph. The subset includes first-type nodes (i.e., rule nodes), source nodes, destination nodes, and GroupingObject nodes that are directly connected to the source nodes and/or the destination nodes. The second-type links are depicted using dashed-line arrows, such as a second-type link 542 in FIG. 5.

In the depicted example, the second type links include a dashed-line arrow from GroupingObject2 node 370 to source node 360, dashed-line arrows from GroupingObject3 node 394 to nodes 392, 494 and 492, a dashed-line arrow 542 from source node 360 to rule node 440, a dashed-line arrow from destination node 392 to Rule1 node 440, a dashed-line arrow from source node 494 to Rule2 node 450, and a dashed-line arrow from destination node 492 to Rule2 node 450.

### 5.2. REMOVING ONE OR MORE FIRST-TYPE LINKS FROM A GRAPH

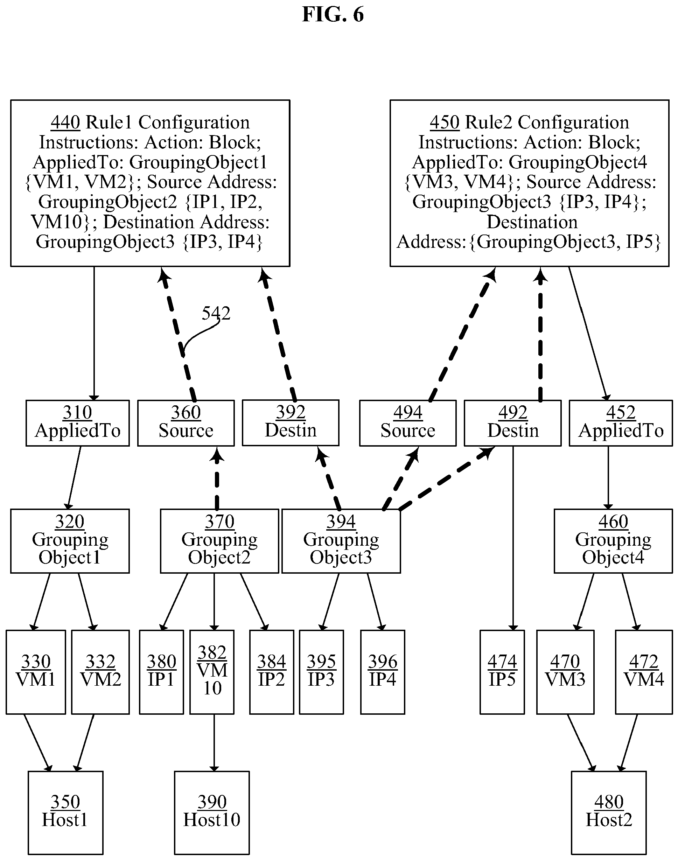

FIG. 6 is a block diagram depicting one of the steps of an example process executed to determine spans for configuration dependencies. In this step, a central controller removes, for each first-type link in the tree graph, a first-type link between two nodes connected by the first-type link if, and only if, the two nodes are also connected by a second-type link of the plurality of second-type links. For example, in this step, the central controller removes a first-type link 442 shown in FIG. 5. Hence link 442 is not depicted in FIG. 6. The corresponding second-type links remain in the graph.

### 5.3. REMOVING ONE OR MORE SECOND-TYPE NODES FROM A GRAPH

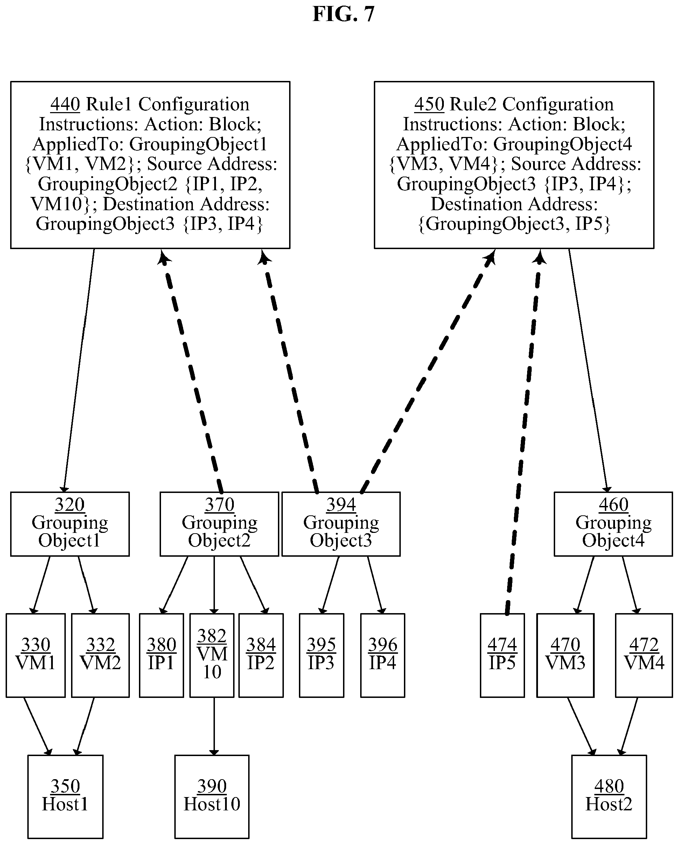

FIG. 7 is a block diagram depicting one of the steps of an example process executed to determine spans for configuration dependencies. In this step, a central controller removes, for each second-type node, of the one or more second-type nodes, a second-type node and merges an incoming link for the second-type node with an outgoing link for the second-type node. Specifically, if there are both incoming and outgoing links of the same type, then they are merged to a single link of that type. If there is an outgoing link of one type without a matching incoming link, then two links of different types can be merged into a link of the second type directed to a first-type node. For example, in this step, the central controller removes nodes 310, 360, 392, 494, 492, 452, which were depicted in FIG. 6. These nodes are not depicted in FIG. 7.

### 5.4. DETERMINING INITIAL SPANS

In an embodiment, a central controller determines initial spans for the first-type nodes and initial spans for the third-type nodes by traversing the corresponding first-type links in the span graph. An initial span for a first-type node includes one or more host identifiers of the host nodes that are reachable in the span graph from the first-type node by traversing the first-type links in a tree branch rooted at the first-type node. An initial span for a third-type node includes one or more host identifiers of the host nodes that are reachable in the span graph from the third-type node by traversing the first-type links in a tree branch rooted at the third-type node.

In an embodiment, initial spans determined for first-type nodes and second-type nodes are stored in a span table.

### 5.5. EXAMPLE INITIAL SPAN TABLE

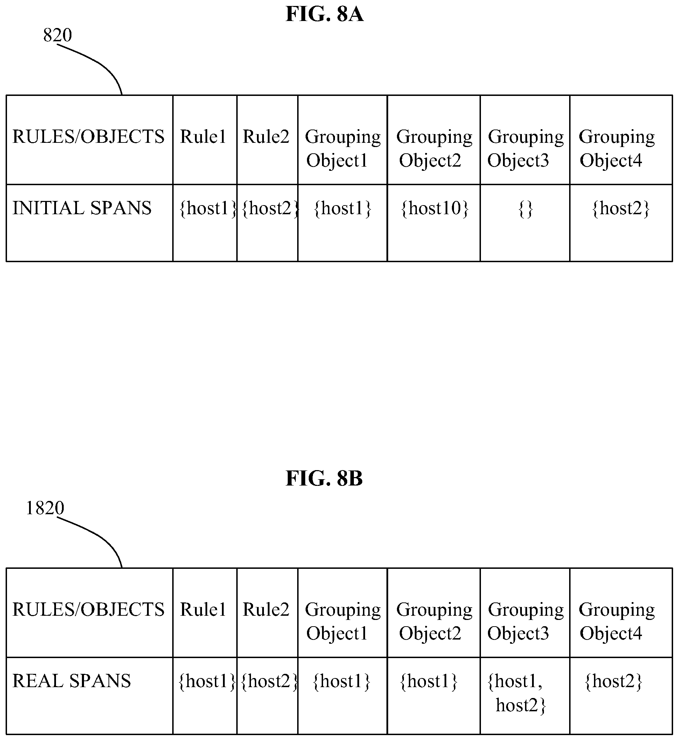

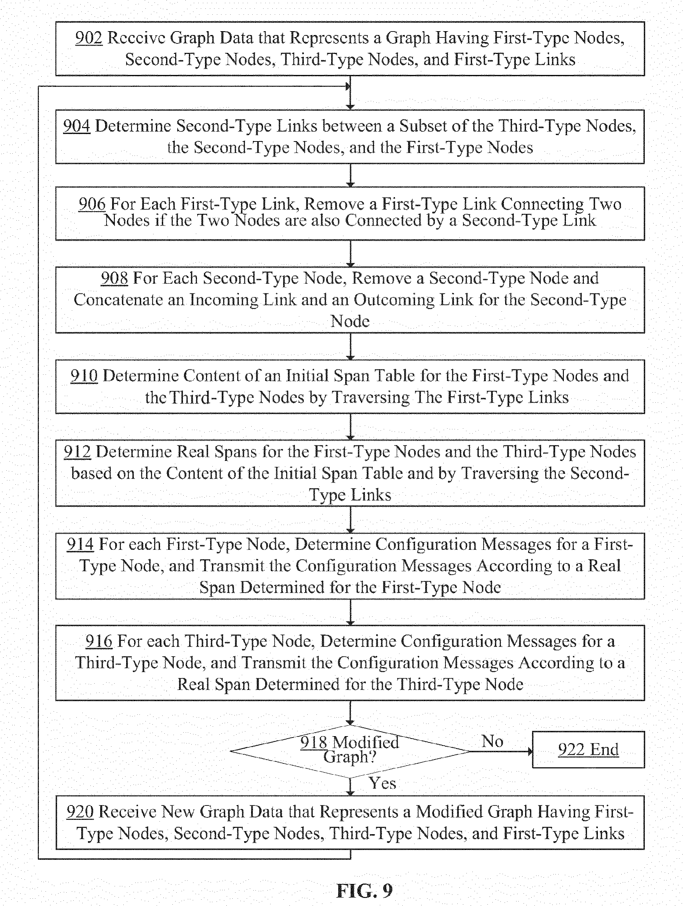

FIG. 8A is a block diagram depicting an example initial span table 820. Example span table 820 may be represented as a data structure that includes two rows and a plurality of columns in each row. In the depicted example, a first row in span table 820 is used to store identifiers of nodes, including identifiers of rule nodes and identifiers of GroupingObject nodes. A second row in span table 820 is used to store identifiers of hosts found on the paths leading from the rule nodes and identifiers of hosts found on the paths leading from the GroupingObject nodes. The host identifiers stored in the second row indicate initial spans found for the nodes; they, however, may be modified as shown in FIG. 9.

In the example depicted in FIG. 7, an initial span table is created/updated for all rule nodes, including Rulel node 440 and Rule2 node 450, and for all GroupingObject nodes, including GroupingObject1 nodes 320, 370, 394, and 460.

Initial spans may be determined by following solid-line arrows in FIG. 7 from Rule1 node 440 to fine host1 node 350. Therefore, span table 820 may be updated to include {host1} for the Rule1.

By following solid-line arrows in FIG. 7 from Rule2 node 450, host2 node 480 may be found. Therefore, span table 820 may be updated to include {host2} for the Rule2.

By following solid-line arrows in FIG. 7 from GroupingObject1 node 320, host1 node 350 may be found. Therefore, span table 820 may be updated to include {host1} for the GroupingObject1.

By following solid-line arrows in FIG. 7 from GroupingObject2 node 370, host10 node 390 may be found. Therefore, span table 820 may be updated to include {host10} for the GroupingObject2.

Following solid-line arrows in FIG. 7 from GroupingObject3 node 394 does not lead to any host. Therefore, span table 820 B may be updated to indicate that there is no span for the GroupingObject3.

By following solid-line arrows in FIG. 7 from GroupingObject4 node 460, host2 node 480 may be found. Therefore, span table 820 may be updated to include {host2} for the GroupingObject4.

### 5.6. DETERMINING REAL SPANS

In an embodiment, a central controller uses information stored in an initial span table and determines real spans for rules and GroupingObjects.

In an embodiment, real spans for nodes are determined by following the dashed-line arrows shown in FIG. 7. Following the dashed-line arrows is not meant to search for hosts; it means to use the content of the initial span table and the dashed-line arrows paths to determine the real spans for the nodes. Note that a real span for a rule node usually corresponds to an initial span included in an initial span table for the rule node.

In an embodiment, a central controller determines real spans for first-type nodes and third-type nodes in a tree graph. The central controller may store the real spans in span cache; a data structure for storing the real spans is usually the same as the data structure used to store a span table.

### 5.7. EXAMPLE REAL SPAN TABLE

FIG. 8B is a block diagram depicting an example real span table. In the depicted example, the real spans are stored in a data structure referred to as a real span table 1820. The content of the real span table is determined by a central controller for first-type nodes and third-type nodes of a tree graph.

For example, by following dashed-line arrows in FIG. 7 from GroupingObject2 node 370 to Rule1 node 440 can be found. Then, the spans for the Rule1 and the GroupingObject2 are looked up in initial span table 820 shown in FIG. 8A. The looked-up spans include {host1} and {host10}, respectively. However, since there is no solid-line pointing from the Rule1 to the GroupingObject2, the span of {host10} in the initial span table for the GroupingObject2 is not a real span for the GroupingObject2. Therefore, the real span for the GroupingObject 2 is {host1}, as shown in real span table 1820 in FIG. 8B.

By following dashed-line arrows in FIG. 7 from GroupingObject3 node 394, Rule1 node 440 and Rule2 node 450 can be found. Then, the spans for the Rule1, Rule2, and GroupingObject3 are looked up in initial span table 820 shown in FIG. 8A. The looked-up spans include {host1} and {host2}. Since there is no span for the GroupingObject3 in the span table, a real span for the GroupingObject3 is {host1, host2}, as shown in real span table 1820 in FIG. 8B.

As shown in FIG. 7, there are no dashed-line arrows from GroupingObject1 node 320. Hence, a real span for GroupingObject1 corresponds to a span shown in span table 820, shown in FIG. 8A, for the GroupingObject1. This includes {host1}. Hence, a real span for the GroupingObject1 is {host1}, as shown in real span table 1820 in FIG. 8B.

As shown in FIG. 7, there are no dashed-line arrows from GroupingObject4 node 460. Hence, a real span for the GroupingObject4 corresponds to a span shown in initial span table 820, shown in FIG. 8A, for the GroupingObject4. This includes {host2}. Hence, a real span for the GroupingObject4 is {host2}, as shown in real span table 1820 in FIG. 8B.

A real span for the Rule1 corresponds to an initial span for the Rule1 and is {host1}, as shown in real span table 1820 in FIG. 8B.

A real span for the Rule2 corresponds to an initial span for the Rule2 and is {host2}, as shown in real span table 1820 in FIG. 8B.

### 6. SENDING CONFIGURATION MESSAGES ACCORDING TO REAL SPANS

In an embodiment, once real spans are determined for rules and GroupingObjects, a central controller generates configuration messages for the rules and configuration messages for the GroupingObjects and transmits the configuration messages according to real span information. For example, configuration messages for the Rule1 are transmitted to the host1 as a real span for the Rule1 is {host1}; configuration messages for the Rule2 are transmitted to the host2 as a real span for the Rule2 is {host2}; configuration messages for the GroupingObject1 are transmitted to the host1 as a real span for the GroupingObject1 is {host1}; configuration messages for the GroupingObject2 are transmitted to the host1 as a real span for the GroupingObject2 is {host1}; configuration messages for the GroupingObject3 are transmitted to the host1 and the host2 as a real span for the GroupingObject3 is {host1, host2}; and configuration messages for the GroupingObject4 are transmitted to the host2 as a real span for the GroupingObject4 is {host2}.

### 7. EXAMPLE FLOW CHART

FIG. 9 is example flow chart for implementing a process of determining spans for configuration dependencies. The example process may be implemented in a central controller executing in a computer network. More specifically, the process may be implemented in a span generator of the central controller and may be invoked once a tree graph generator of the central controller finishes generating a span graph representing network configuration dependencies for the computer network.

In step 902, a central controller receives graph data that represents a span graph having a plurality of nodes and a plurality of first-type links between the plurality of nodes. The graph nodes may include one or more first-type nodes, one or more second-type nodes, and one or more third-type nodes.

If the graph represents, for example, distributed firewall rules, then the first-type nodes correspond to the firewall rules; the second-type nodes correspond to AppliedTo nodes, Source nodes, and Destination nodes; and the third-type nodes correspond to GroupingObjects identified for the firewall rules. The graph nodes may also include other types of nodes, such identifiers of virtual machines, IP addresses, MAC addresses, identifiers of hosts, and the like. Examples of nodes are described in FIG. 4.

In step 904, the central controller determines a plurality of second-type links between a subset of the one or more third-type nodes, the one or more second-type nodes, and one or more first-type nodes. If the graph represents, for example, distributed firewall rules, then the second-type links are the links connecting GroupingObject nodes to Source nodes, the links connecting GroupingObject nodes to Destination nodes, the links connecting the Source nodes to rule nodes, and the links connecting the Source/Destination nodes to the rule nodes. Examples of the second-type links are shown using dashed-line arrows, as in FIG. 5.

In step 906, the central controller removes, for each first-type link, of the plurality of first-type links, a first-type link between two nodes connected by the first-type link if the two nodes are also connected by a second-type link of the plurality of second-type links. Examples of removing first-type links from a graph are described in FIG. 6.

In step 908, the central controller removes, for each second-type node, of the one or more second-type nodes, a second-type node and concatenates an incoming link for the second-type node with an outcoming link for the second-type node. Examples of removing second-type nodes from a graph are described in FIG. 7.

In step 910, the central controller determines content of an initial span table for the one or more first-type nodes and the one or more third-type nodes by traversing the plurality of first-type links. An example of the initial span table is described in FIG. 8A, and the process of determining the content of the initial span table is described in FIG. 8A.

In step 912, the central controller determines a plurality of real spans for the one or more first-type nodes and for the one or more third-type nodes based on the content of the initial span table and by traversing the plurality of second-type links in the graph.

If the graph represents, for example, distributed firewall rules, then a real span for a particular rule, of the one or more first-type nodes, indicates one or more hosts to which a configuration message generated for the particular rule needs to be transmitted A real span for a particular GroupingObject, of the one or more third-type nodes in the graph, indicates one or more hosts to which a configuration message generated for the particular GroupingObject is to be transmitted. An example process of determining the real spans is described in FIG. 7.

In step 914, the central controller determines, for each first-type node, of the one or more first-type nodes, configuration messages for a first-type node, and transmits the configuration messages determined for the first-type node according to a real span determined for the first-type node. Examples of configuration messages include messages that the central controller generates and sends to local controllers implemented in hosts to configure the rules on the hosts. For instance, the central controller may generate a message for a particular rule and include in the message a description of the rule, source entities for the rule, destination entities for the rule, and actions for the rule. The central controller may transmit the message to hosts whose identifiers are included in a real span generated for the particular rule to notify the hosts about the particular rule. Upon receiving the message, a local controller executing on the host may update its own local control plane information and configure the particular rule.

In step 916, the central controller determines, for each third-type node, of the one or more third-type nodes, configuration messages for a third-type node, and transmits the configuration messages determined for the third-type node according to a real span determined for the third-type node. Examples of configuration messages may include messages that the central controller generates and sends to local controllers implemented in hosts to configure the rules on the hosts.

In step 918, the central control plane tests whether the graph data has been modified. The modifications reflects events such as migrations of one or more devices in the network, deleting some devices from the network configuration, or adding new devices to the network.

If the central controller determines that the graph has been modified, then the central controller receives a new graph data that reflects the modifications. The new graph data represents a modified graph having first-type nodes, second-type nodes, third-type nodes and first-type links. Then, the central controller proceeds to step 904, described above.

However, if the central controller determines that the graph has not been modified, then the central controller may finish executing in step 922. Alternatively, the central controller may await, in step 918, a notification that the graph has been modified.

### 8. DETERMINING SPANS FROM A MODIFIED SPAN GRAPH

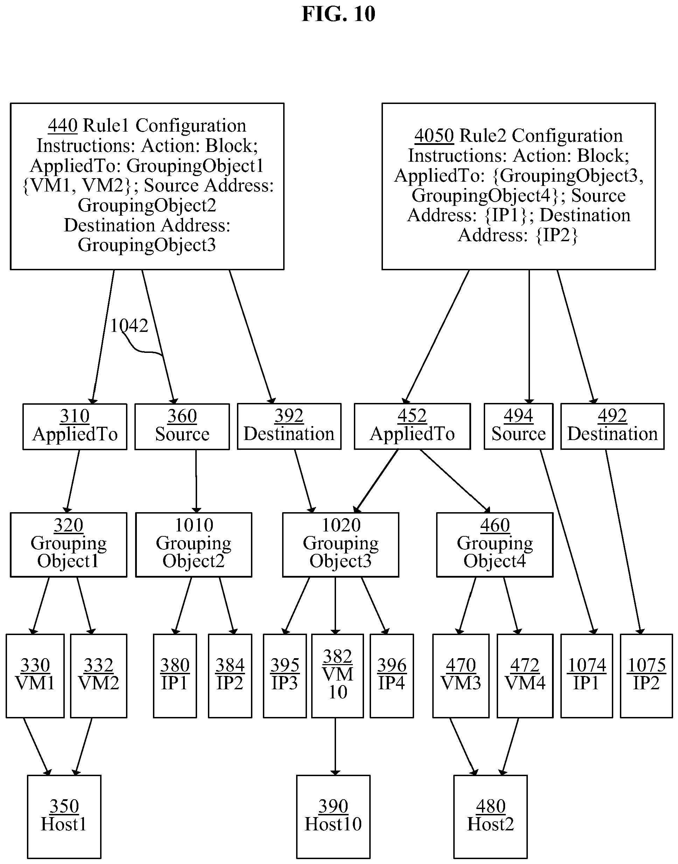

FIG. 10 is a block diagram depicting a modified example tree graph. Suppose that Rule2 450 shown in FIG. 4 has been modified, and the modifications include, among other things, modified rule 4050 shown in FIG. 10, and a modified AppliedTo construct that includes both a GroupingObject3 and a GroupingObject4. The modifications are reflected in FIG. 10, in which an AppliedTo node 452 is now connected to both a GroupingObject3 node 1020 and a GroupingObject4 node 460. A modified span graph represents both a Rule1 440 and a modified Rule2 4050. Real spans for the modified span graph may be determined using the approach described in FIG. 9. Note that the real spans for the modified graph are going to be different than the real spans for the original graph depicted in FIG. 4.

A modified graph depicted in FIG. 10 includes first-type nodes, second-type nodes, third-type nodes and first-type links between the nodes. The first-type links represent network configuration dependencies in the computer network and are depicted using solid-line arrows, such as a first-type link 1042 in FIG. 10.

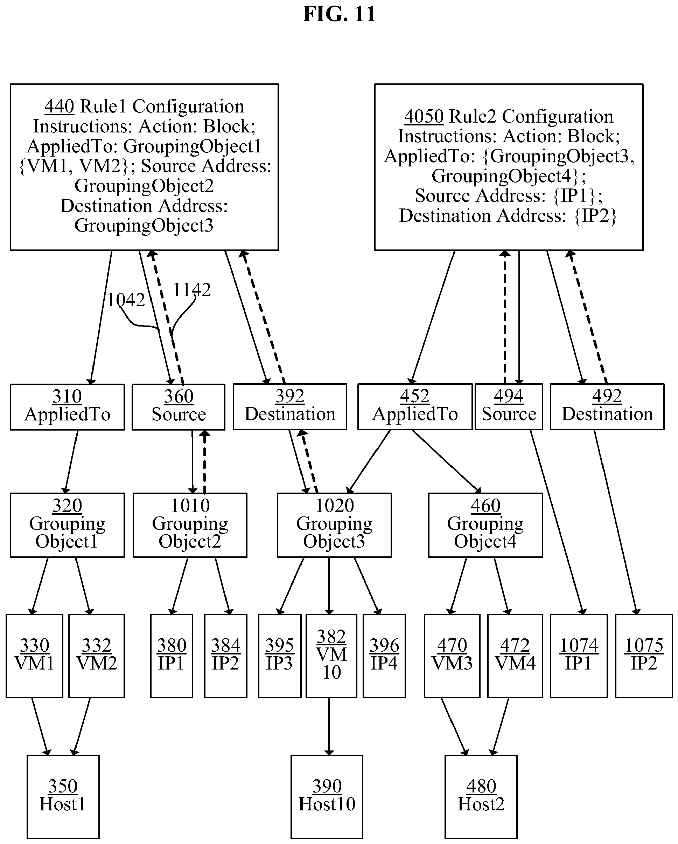

FIG. 11 is a block diagram depicting one of the steps of an example process executed to determine spans for configuration dependencies. In this step, a central controller determines, for a modified graph, a plurality of second-type links between a subset of the one or more third-type nodes, the one or more second-type nodes, and one or more first-type nodes, and adds those second-type links to the tree graph. The second-type links are depicted in FIG. 11 using dashed-line arrows, such as an example dashed-line arrow 1142.

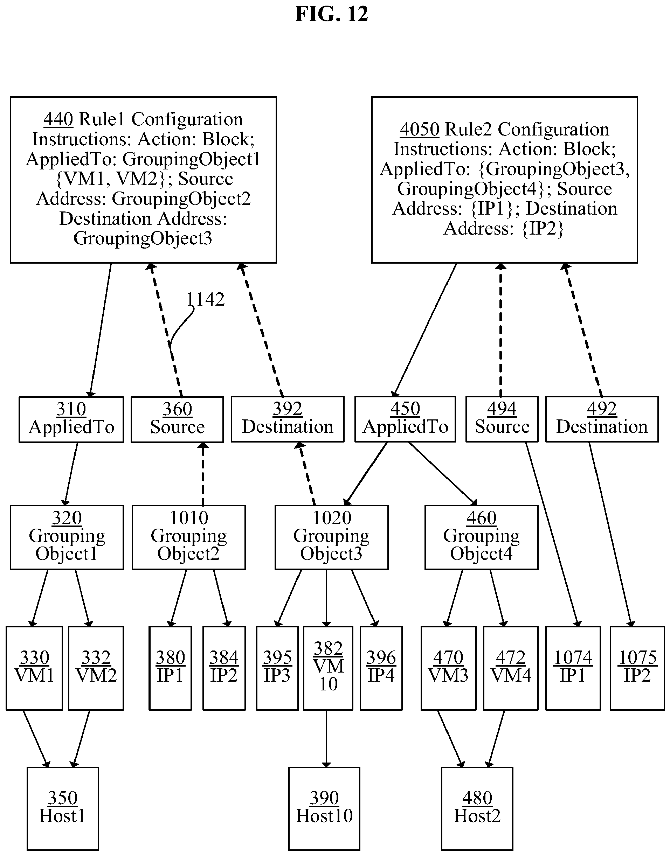

FIG. 12 is a block diagram depicting one of the steps of an example process executed to determine spans for configuration dependencies. In this step, a central controller removes, for each first-type link in the tree graph, a first-type link between two nodes connected by the first-type link if the two nodes are also connected by a second-type link of the plurality of second-type links. For example, in this step, the central controller removes a first-type link 1042 shown in FIG. 11. That link is not depicted in FIG. 12.

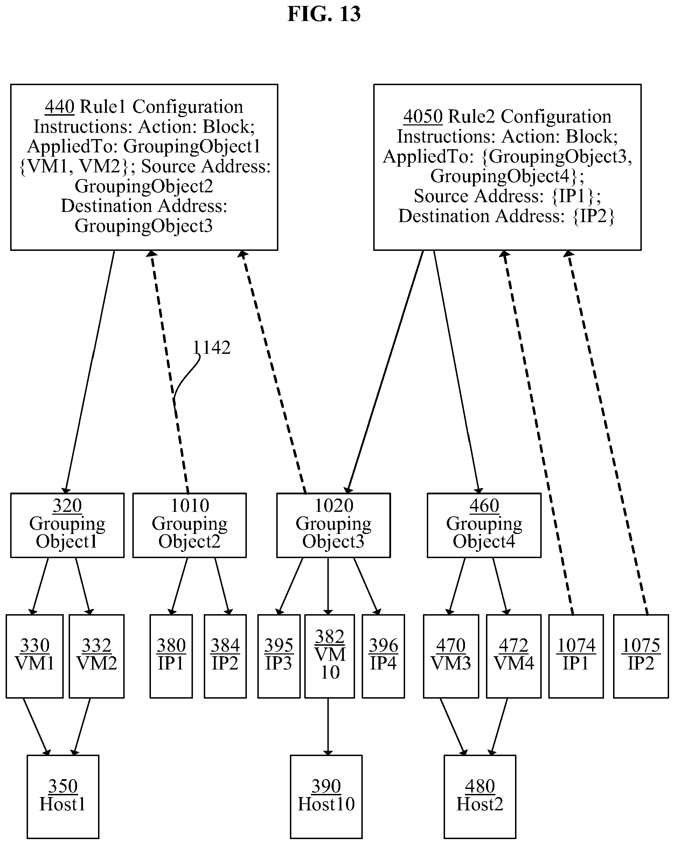

FIG. 13 is a block diagram depicting one of the steps of an example process executed to determine spans for configuration dependencies. In this step, a central controller removes, for each second-type node, of the one or more second-type nodes, a second-type node and concatenates an incoming link for the second-type node with an outcoming link for the second-type node. For example, in this step, the central controller removes nodes 310, 360, 392, 494, 492, 452, which were depicted in FIG. 12. These nodes are not depicted in FIG. 13.

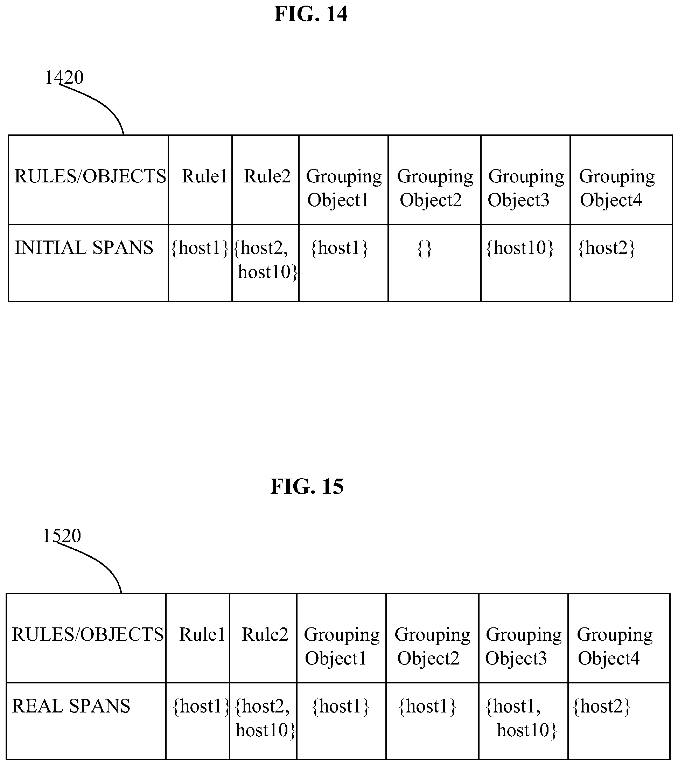

FIG. 14 is a block diagram depicting an example initial span table 1420. Content of example initial span table 1420 includes, for each node, one or more host identifiers of hosts that are reachable from the node in a tree graph depicted in FIG. 13. The initial spans are determined using the approach described in step 910 of FIG. 9.

Example initial span table 1420 includes an initial span of {host1} for a GroupingObject1, no initial span for a GroupingObject2, an initial span of {host10} for a GroupingObject3, an initial span of {host2} for a GroupingObject4, an initial span of {host1} for a Rule1, and an initial span of {host2, host10} for a Rule2.

Once initial spans are determined for first-type nodes and second-type nodes, the central controller determines real spans for the nodes.

FIG. 15 is a block diagram depicting an example real span table 1520. Real spans for nodes are determined by following the dashed-line arrows shown in FIG. 13 from each GroupingObject to find one or more corresponding rules. Then, the central controller looks-up the initial span for the GroupingObject and the corresponding rules and determines the real spans for the GroupingObject.

For example, by following dashed-line arrows in FIG. 13 from a GroupingObject2 1010, a Rule1 440 node can be found. Then, the spans for the Rule1 and the GroupingObject2 are looked up in initial span table 1420 shown in FIG. 14. The looked-up spans include {host1} and {host10}, respectively. However, since there is no solid-line pointing from the Rule1 to the GroupingObject2, the initial span of {host10} in the span table for GroupingObject2 is not the real span for the GroupingObject2. Therefore, the real span for the GroupingObject2 in real span table 1520 is {host1}.

Using the similar approach, a real span for the GroupingObject3 is determined to be {host1, hostl0}, a real span for the GroupingObject 1 is {host1}, a real span for the GroupingObject4 is {host2}, a real span for the Rule1 is {host1}, and a real span for the Rule2 includes {host2, host10}, as shown in real span table 1520.

### 9. EXAMPLES OF ADDITIONAL IMPLEMENTATIONS

In addition to using span graphs for determining spans for configuring distributed firewall rules in computer networks, span graphs may also be used to configure load balancing services. A span graph used to configure load balancing services may include nodes and edges. The nodes may correspond to load balancing virtual servers and logical service router clusters, while the edges may represent dependencies between the nodes. The nodes may also include load balancing profiles such as application profiles, persistence profiles, TCP profiles, web application firewall ("WAF") profiles, client SSL profiles, and server SSL profiles. The edges between the nodes may indicate the dependencies between the profiles and the servers and the routers. The spans of objects that represent the load balancing virtual servers may depend on the spans of the load balancing virtual servers. The spans of load balancing virtual servers depend on the spans of load balancing services. The spans of load balancing services may depend on existence of the edges in the graph that connect the services to the logical service providers or clusters. The dependency relations for the load balancing configurations may be resolved using span graphs that are similar to a span graph that is used for distributed firewall rules, described above.

Span graphs may also be used to configure IPSec services and VPN session services in computer networks. A span graph used to configure IPSec and/or VPN services may include nodes and edges. The nodes may correspond to IPSec VPN sessions, sources clusters, IPSec peer endpoints, IPSec local endpoint, and the like. The edges may represent bindings between IPSec VPN services and between sources clusters. A span of an IPSec VPN service may include the edge nodes in the source cluster. A span of an IPSec peer endpoint and an IPSec local endpoint may contain the edge nodes included in a corresponding source cluster. The dependency relations for the services configurations may be resolved using span graphs similar to the span graphs used for distributed firewall rules, described above.

### 10. IMPLEMENTATION MECHANISMS

The present approach may be implemented using a computing system comprising one or more processors and memory. The one or more processors and memory may be provided by one or more hardware machines. A hardware machine includes a communications bus or other communication mechanisms for addressing main memory and for transferring data between and among the various components of hardware machine. The hardware machine also includes one or more processors coupled with the bus for processing information. The processor may be a microprocessor, a system on a chip (SoC), or other type of hardware processor.

Main memory may be a random-access memory (RAM) or other dynamic storage device. It may be coupled to a communications bus and used for storing information and software instructions to be executed by a processor. Main memory may also be used for storing temporary variables or other intermediate information during execution of software instructions to be executed by one or more processors.

### 11. GENERAL CONSIDERATIONS

Some of various drawings illustrate a number of logical stages in a particular order. It should be recognized that the stages could be implemented in hardware, firmware, software or any combination thereof.

The foregoing description, for purpose of explanation, has been described regarding specific embodiments. However, the illustrative embodiments above are not intended to be exhaustive or to limit the scope of the claims to the precise forms disclosed. Many modifications and variations are possible in view of the above teachings. The embodiments were chosen to best explain the principles underlying the claims and their practical applications, to thereby enable others skilled in the art to best use the embodiments with various modifications as are suited to the uses contemplated.

Any definitions set forth herein for terms contained in the claims may govern the meaning of such terms as used in the claims. No limitation, element, property, feature, advantage or attribute that is not expressly recited in a claim should limit the scope of the claim in any way. The specification and drawings are to be regarded in an illustrative rather than a restrictive sense.

## Claims

1. A computer-implemented method for determining spans for network configuration dependencies, the method comprising:
receiving, by a central controller (150) implemented in a computer network, graph data that represents a rule-dependency-graph having a plurality of graph nodes and a plurality of first-type links between the plurality of graph nodes and that represents network configuration dependencies in the computer network;
wherein the graph nodes comprise one or more first-type nodes, one or more second-type nodes, one or more third-type nodes, and a set of host nodes;
wherein the one or more first-type nodes include one or more rule nodes (140, 440, 450) which correspond to one or more rules;
wherein the one or more second-type nodes include one or more of: an AppliedTo node (310, 452), a Source node (360, 494) and a Destination (392, 492) node, wherein an AppliedTo node (310, 452) for a particular rule defines entities to which the particular rule applies; wherein a Source node (360, 494) for a particular rule defines one or more source entities to which the particular rule applies; and wherein a Destination node (392, 492) for a particular rule defines one or more destination entities to which the particular rule applies;
wherein the one or more third-type nodes include one or more GroupingObject nodes (320, 370, 394, 460) which correspond to GroupingObjects identified for the one or more rules, wherein a GroupingObject is a data structure that is used to store identifiers of the entities that belong to the GroupingObject;
determining a plurality of second-type links between a subset of the one or more third-type nodes, the one or more second-type nodes, and one or more first-type nodes, wherein the subset includes rule nodes, source nodes, destination nodes, and GroupingObject nodes that are directly connected to the source nodes and/or the destination nodes;
for each first-type link, of the plurality of first-type links, removing a first-type link between two nodes connected by the first-type link if the two nodes are also connected by a second-type link of the plurality of second-type links;
for each second-type node, of the one or more second-type nodes, removing a second-type node and concatenating an incoming link for the second-type node with an outcoming link for the second-type node;
determining content of an initial span table which includes an initial span for the one or more first-type nodes and the one or more third-type nodes, wherein an initial span for a first-type node includes one or more host identifiers of the host nodes that are reachable in the rule-dependency graph from the first-type node by traversing the plurality of first-type links in a tree branch rooted at the first-type node and an initial span for a third-type node includes one or more host identifiers of the host nodes that are reachable in the rule-dependency graph from the third-type node by traversing the first-type links in a tree branch rooted at the third-type node;
determining a plurality of real spans for the one or more first-type nodes and for the one or more third-type nodes, wherein a real span for a first-type node corresponds to the initial span for the first-type node in the initial span table and wherein a real span for a third-type node corresponds to the initial span for the third-type node and the initial span of any of the plurality of first type nodes which are found by traversing the plurality of second-type links from the third-node; and
transmitting configuration messages for the one or more first-type nodes and the one or more third-type nodes to hosts identified in the plurality of real spans.

2. The computer-implemented method of Claim 1, wherein a real span for a particular rule, of the one or more first-type nodes, indicates one or more hosts to which a configuration message generated for the particular rule is transmitted; and wherein, a real span for a particular GroupingObject (320, 370, 394, 460), of the one or more third-type nodes, indicates one or more hosts to which a configuration message generated for the particular GroupingObject (320, 370, 394, 460) is transmitted.

3. The computer-implemented method of Claim 1, wherein the graph is generated based on a tree graph created based on data provided by a management plane (120) application implemented in the computer network.

4. The computer-implemented method of Claim 1, further comprising: receiving an indication that the graph data has been modified; and in response to receiving the indication that the graph data has been modified, updating the plurality of real spans for nodes currently included in the graph.

5. The computer-implemented method of Claim 4, wherein the graph data is modified by one or more event selected from the group comprising: one or more of migrations of one or more devices in the network, deleting devices from the network configuration, or adding new devices to the network.

6. The computer-implemented method of Claim 1, wherein the configuration messages configure the rules on the hosts.

7. A central controller (150) implemented in a computer network and configured to implement mechanisms for determining spans for network configuration dependencies, the central controller (150) comprising:
one or more processors;
one or more memory units; and
one or more non-transitory computer-readable storage media storing one or more computer instructions which, when executed by the one or more processors, cause the one or more processors to perform:
receiving, by the central controller (150) implemented in the computer network, graph data that represents a rule-dependency-graph having a plurality of graph nodes and a plurality of first-type links between the plurality of graph nodes and that represents network configuration dependencies in the computer network;
wherein the graph nodes comprise one or more first-type nodes, one or more second-type nodes, one or more third-type nodes, and a set of host nodes;
wherein the one or more first-type nodes include one or more rule nodes (140, 440, 450) which correspond to one or more rules;
wherein the one or more second-type nodes include one or more of: an AppliedTo node (310, 452), a Source node (360, 494) and a Destination (392, 492) node, wherein an AppliedTo node (310, 452) for a particular rule defines entities to which the particular rule applies; wherein a Source node (360, 494) for a particular rule defines one or more source entities to which the particular rule applies; and wherein a Destination node (392, 492) for a particular rule defines one or more destination entities to which the particular rule applies;
wherein the one or more third-type nodes include one or more GroupingObject nodes (320, 370, 394, 460) which correspond to GroupingObjects identified for the one or more rules, wherein a GroupingObject is a data structure that is used to store identifiers of the entities that belong to the GroupingObject;
determining a plurality of second-type links between a subset of the one or more third-type nodes, the one or more second-type nodes, and one or more first-type nodes, wherein the subset includes rule nodes, source nodes, destination nodes, and GroupingObject nodes that are directly connected to the source nodes and/or the destination nodes;
for each first-type link, of the plurality of first-type links, removing a first-type link between two nodes connected by the first-type link if the two nodes are also connected by a second-type link of the plurality of second-type links;
for each second-type node, of the one or more second-type nodes, removing a second-type node and concatenating an incoming link for the second-type node with an outcoming link for the second-type node;
determining content of an initial span table which includes an initial span for the one or more first-type nodes and the one or more third-type nodes, wherein an initial span for a first-type node includes one or more host identifiers of the host nodes that are reachable in the rule-dependency graph from the first-type node by traversing the plurality of first-type links in a tree branch rooted at the first-type node and an initial span for a third-type node includes one or more host identifiers of the host nodes that are reachable in the rule-dependency graph from the third-type node by traversing the first-type links in a tree branch rooted at the third-type node;
determining a plurality of real spans for the one or more first-type nodes and for the one or more third-type nodes, wherein a real span for a first-type node corresponds to the initial span for the first-type node in the initial span table and wherein a real span for a third-type node corresponds to the initial span for the third-type node and the initial span of any of the plurality of first type nodes which are found by traversing the plurality of second-type links; and
transmitting configuration messages for the one or more first-type nodes and the one or more third-type nodes to hosts identified in the plurality of real spans.

8. The central controller of Claim 7, wherein a real span for a particular rule, of the one or more first-type nodes, indicates one or more hosts to which a configuration message generated for the particular rule is transmitted; and wherein, for a particular rule, a real span for a particular GroupingObject (320, 370, 394, 460), of the one or more third-type nodes, indicates one or more hosts to which a configuration message generated for the particular GroupingObject is transmitted.

9. The central controller of Claim 7, wherein the graph is generated based on a tree graph created based on data provided by a management plane (120) application implemented in the computer network.

10. The central controller of Claim 7, further comprising: receiving an indication that the graph data has been modified; and in response to receiving the indication that the graph data has been modified, updating the plurality of real spans for nodes currently included in the graph.

11. The central controller of Claim 10, wherein the graph data is modified by one or more event selected from the group comprising: one or more of migrations of one or more devices in the network, deleting devices from the network configuration, or adding new devices to the network.

12. The central controller of Claim 7, wherein the configuration messages configure the rules on the hosts.

13. One or more non-transitory computer-readable storage media storing one or more computer instructions which, when executed by one or more processors, cause the one or more processors to perform the steps of any one of the claims 1 to 6.

## Patentansprüche

1. Ein computerimplementiertes Verfahren zum Bestimmen von Bereichen für Netzwerkkonfigurationsabhängigkeiten, das Verfahren aufweisend:
Empfangen, mittels eines zentralen Controllers (150), welcher in einem Computernetzwerk implementiert ist, von Graphdaten, welche einen Regel-Abhängigkeit-Graphen repräsentieren, welcher eine Mehrzahl von Graphknoten und eine Mehrzahl von erster-Typ-Verbindungen zwischen der Mehrzahl von Graphknoten hat, und welcher Netzwerkkonfigurationsabhängigkeiten in dem Computernetzwerk repräsentiert;
wobei die Graphknoten einen oder mehrere erster-Typ-Knoten, einen oder mehrere zweiter-Typ-Knoten, einen oder mehrere dritter-Typ-Knoten, und einen Satz von Host-Knoten aufweisen;
wobei der eine oder die mehreren erster-Typ-Knoten einen oder mehrere Regelknoten (140, 440, 450) enthalten, welche zu einer oder mehreren Regeln korrespondieren;
wobei der eine oder die mehreren zweiter-Typ-Knoten eines oder mehrere enthalten von: einem AppliedTo Knoten (310, 452), einem Source-Knoten (360, 494), und einem Ziel- (392, 492) Knoten, wobei ein AppliedTo Knoten (310, 452) für eine bestimmte Regel Entitäten definiert, auf welche die bestimmte Regel angewendet wird; wobei ein Source-Knoten (360, 494) für eine bestimmte Regel eine oder mehrere Source-Entitäten definiert, auf welche die bestimmte Regel angewendet wird; und wobei ein Zielknoten (392, 492) für eine bestimmte Regel eine oder mehrere Zielentitäten definiert, auf welche die bestimmte Regel angewendet wird;
wobei der eine oder die mehreren dritter-Typ-Knoten einen oder mehrere GroupingObject-Knoten (320, 370, 394, 460) enthalten, welche zu GroupingObjects korrespondieren, welche für die eine oder die mehreren Regeln identifiziert sind, wobei ein GroupingObject eine Datenstruktur ist, welche verwendet wird, um Identifizierer der Entitäten zu speichern, welche zu dem GroupingObject gehören;
Bestimmen einer Mehrzahl von zweiter-Typ-Verbindungen zwischen einem Teilsatz des einen oder der mehreren dritter-Typ-Knoten, des einen oder der mehreren zweiter-Typ-Knoten, und einem oder mehreren erster-Typ-Knoten, wobei der Teilsatz Regelknoten, Source-Knoten, Zielknoten, und GroupingObject-Knoten enthält, welche mit den Source-Knoten und/oder den Zielknoten direkt verbunden sind;
für jede erster-Typ-Verbindung von der Mehrzahl von erster-Typ-Verbindungen, Entfernen einer erster-Typ-Verbindung zwischen zwei Knoten, welche mittels der erster-Typ-Verbindung verbunden sind, falls die zwei Knoten auch mittels einer zweiter-Typ-Verbindung von der Mehrzahl von zweiter-Typ-Verbindungen verbunden sind,
für jeden zweiter-Typ-Knoten von dem einen oder den mehreren zweiter-Typ-Knoten, Entfernen eines zweiter-Typ-Knotens und Verknüpfen einer eingehenden Verbindung für den zweiter-Typ-Knoten mit einer ausgehenden Verbindung für den zweiter-Typ-Knoten;
Bestimmen eines Inhalts einer initialen Bereichstabelle, welche einen initialen Bereich für den einen oder die mehreren erster-Typ-Knoten und den einen oder die mehreren dritter-Typ-Knoten enthält, wobei ein initialer Bereich für einen erster-Typ-Knoten einen oder mehrere Host-Identifizierer der Host-Knoten enthält, welche in dem Regelabhängigkeitsgraphen von dem erster-Typ-Knoten erreichbar sind mittels Durchlaufens der Mehrzahl von erster-Typ-Verbindungen in einem Baumzweig, welcher an dem erster-Typ-Knoten rootet, und
wobei ein initialer Bereich für einen dritter-Typ-Knoten einen oder mehrere Host-Identifizierer der Host-Knoten enthält, welche in dem Regelabhängigkeitsgraphen von dem dritter-Typ-Knoten erreichbar sind mittels Durchlaufens der erster-Typ-Verbindungen in einem Baumzweig, welcher bei dem dritter-Typ-Knoten rootet;
Bestimmen einer Mehrzahl realer Bereiche für den einen oder die mehreren erster-Typ-Knoten und für den einen oder die mehreren dritter-Typ-Knoten, wobei ein realer Bereich für einen erster-Typ-Knoten zu dem initialen Bereich für den erster-Typ-Knoten in der initialen Bereichstabelle korrespondiert, und wobei ein realer Bereich für einen dritter-Typ-Knoten zu einem initialen Bereich für den dritter-Typ-Knoten korrespondiert, und der initiale Bereich eines beliebigen von der Mehrzahl von erster-Typ-Knoten, welche mittels Durchlaufens der Mehrzahl von zweiter-Typ-Verbindungen von dem dritten Knoten gefunden werden; und
Übertragen von Konfigurationsnachrichten für den einen oder die mehreren erster-Typ-Knoten und den einen oder die mehreren dritter-Typ-Knoten zu Hosts, welche in der Mehrzahl von realen Bereichen identifiziert sind.

2. Das computerimplementierte Verfahren gemäß Anspruch 1, wobei ein realer Bereich für eine bestimmte Regel des einen oder der mehreren erster-Typ-Knoten einen oder mehrere Hosts angibt, zu welchem eine Konfigurationsnachricht, welche für die bestimmte Regel erzeugt ist, übertragen wird; und wobei ein realer Bereich für ein bestimmtes GroupingObject (320, 370, 394, 460) des einen oder der mehreren dritter-Typ-Knoten einen oder mehrere Hosts angibt, zu welchen eine Konfigurationsnachricht, welche für das bestimmte GroupingObject (320, 370, 394, 460) erzeugt ist, übertragen wird.

3. Das computerimplementierte Verfahren gemäß Anspruch 1, wobei der Graph basierend auf einem Baumgraphen erzeugt wird, welcher basierend auf Daten erzeugt ist, welche von einer Management-Ebene- (120) Anwendung bereitgestellt werden, welche in dem Computernetzwerk implementiert ist.

4. Das computerimplementierte Verfahren gemäß Anspruch 1, ferner aufweisend:
Empfangen einer Angabe, dass die Graphdaten modifiziert wurden; und
als Reaktion auf das Empfangen der Angabe, dass die Graphdaten modifiziert wurden, Updaten der Mehrzahl von realen Bereichen für Knoten, welche gegenwärtig in dem Graphen enthalten sind.

5. Das computerimplementierte Verfahren gemäß Anspruch 4, wobei die Graphdaten von einem oder mehreren Ereignissen modifiziert werden, welche ausgewählt sind aus einer Gruppe, aufweisend: eine oder mehrere von Migrationen von einer oder mehreren Vorrichtungen in dem Netzwerk, Löschen von Vorrichtungen aus der Netzwerkkonfiguration, oder Hinzufügen neuer Vorrichtungen zu dem Netzwerk.

6. Das computerimplementierte Verfahren gemäß Anspruch 1, wobei die Konfigurationsnachrichten die Regeln auf den Hosts konfigurieren.

7. Ein zentraler Controller (150), welcher in einem Computernetzwerk implementiert ist und konfiguriert ist, Mechanismen zum Bestimmen von Bereichen für Netzwerkkonfigurationsabhängigkeiten zu implementieren, wobei der zentrale Controller (150) aufweist:
einen oder mehrere Prozessoren;
eine oder mehrere Speichereinheiten; und
ein oder mehrere nicht transitorische computerlesbare Speichermedien, welche eine oder mehrere Computeranweisungen speichern, welche, wenn sie mittels des einen oder der mehreren Prozessoren ausgeführt werden, den einen oder die mehreren Prozessoren veranlassen, auszuführen:
Empfangen, mittels des zentralen Controllers (150), welcher in einem Computernetzwerk implementiert ist, von Graphdaten, welche einen Regel-Abhängigkeit-Graphen repräsentieren, welcher eine Mehrzahl von Graphknoten und eine Mehrzahl von erster-Typ-Verbindungen zwischen der Mehrzahl von Graphknoten hat, und welcher Netzwerkkonfigurationsabhängigkeiten in dem Computernetzwerk repräsentiert;
wobei die Graphknoten einen oder mehrere erster-Typ-Knoten, einen oder mehrere zweiter-Typ-Knoten, einen oder mehrere dritter-Typ-Knoten, und einen Satz von Host-Knoten aufweisen;
wobei der eine oder die mehreren erster-Typ-Knoten einen oder mehrere Regelknoten (140, 440, 450) enthalten, welche zu einer oder mehreren Regeln korrespondieren;
wobei der eine oder die mehreren zweiter-Typ-Knoten eines oder mehrere enthalten von: einem AppliedTo Knoten (310, 452), einem Source-Knoten (360, 494), und einem Ziel- (392, 492) Knoten, wobei ein AppliedTo Knoten (310, 452) für eine bestimmte Regel Entitäten definiert, auf welche die bestimmte Regel angewendet wird; wobei ein Source-Knoten (360, 494) für eine bestimmte Regel eine oder mehrere Source-Entitäten definiert, auf welche die bestimmte Regel angewendet wird; und wobei ein Zielknoten (392, 492) für eine bestimmte Regel eine oder mehrere Zielentitäten definiert, auf welche die bestimmte Regel angewendet wird;
wobei der eine oder die mehreren dritter-Typ-Knoten einen oder mehrere GroupingObject-Knoten (320, 370, 394, 460) enthalten, welche zu GroupingObjects korrespondieren, welche für die eine oder die mehreren Regeln identifiziert sind, wobei ein GroupingObject eine Datenstruktur ist, welche verwendet wird, um Identifizierer der Entitäten zu speichern, welche zu dem GroupingObject gehören;
Bestimmen einer Mehrzahl von zweiter-Typ-Verbindungen zwischen einem Teilsatz des einen oder der mehreren dritter-Typ-Knoten, des einen oder der mehreren zweiter-Typ-Knoten, und einem oder mehreren erster-Typ-Knoten, wobei der Teilsatz Regelknoten, Source-Knoten, Zielknoten, und GroupingObject-Knoten enthält, welche mit den Source-Knoten und/oder den Zielknoten direkt verbunden sind;
für jede erster-Typ-Verbindung von der Mehrzahl von erster-Typ-Verbindungen, Entfernen einer erster-Typ-Verbindung zwischen zwei Knoten, welche mittels der erster-Typ-Verbindung verbunden sind, falls die zwei Knoten auch mittels einer zweiter-Typ-Verbindung von der Mehrzahl von zweiter-Typ-Verbindungen verbunden sind,
für jeden zweiter-Typ-Knoten von dem einen oder den mehreren zweiter-Typ-Knoten, Entfernen eines zweiter-Typ-Knotens und Verknüpfen einer eingehenden Verbindung für den zweiter-Typ-Knoten mit einer ausgehenden Verbindung für den zweiter-Typ-Knoten;
Bestimmen eines Inhalts einer initialen Bereichstabelle, welche einen initialen Bereich für den einen oder die mehreren erster-Typ-Knoten und den einen oder die mehreren dritter-Typ-Knoten enthält, wobei ein initialer Bereich für einen erster-Typ-Knoten einen oder mehrere Host-Identifizierer der Host-Knoten enthält, welche in dem Regelabhängigkeitsgraphen von dem erster-Typ-Knoten erreichbar sind mittels Durchlaufens der Mehrzahl von erster-Typ-Verbindungen in einem Baumzweig, welcher an dem erster-Typ-Knoten rootet, und
wobei ein initialer Bereich für einen dritter-Typ-Knoten einen oder mehrere Host-Identifizierer der Host-Knoten enthält, welche in dem Regelabhängigkeitsgraphen von dem dritter-Typ-Knoten erreichbar sind mittels Durchlaufens der erster-Typ-Verbindungen in einem Baumzweig, welcher bei dem dritter-Typ-Knoten rootet;
Bestimmen einer Mehrzahl realer Bereiche für den einen oder die mehreren erster-Typ-Knoten und für den einen oder die mehreren dritter-Typ-Knoten, wobei ein realer Bereich für einen erster-Typ-Knoten zu dem initialen Bereich für den erster-Typ-Knoten in der initialen Bereichstabelle korrespondiert, und wobei ein realer Bereich für einen dritter-Typ-Knoten zu einem initialen Bereich für den dritter-Typ-Knoten korrespondiert, und der initiale Bereich eines beliebigen von der Mehrzahl von erster-Typ-Knoten, welche mittels Durchlaufens der Mehrzahl von zweiter-Typ-Verbindungen gefunden werden; und
Übertragen von Konfigurationsnachrichten für den einen oder die mehreren erster-Typ-Knoten und den einen oder die mehreren dritter-Typ-Knoten zu Hosts, welche in der Mehrzahl von realen Bereichen identifiziert sind.

8. Der zentrale Controller gemäß Anspruch 7, wobei ein realer Bereich für eine bestimmte Regel des einen oder der mehreren erster-Typ-Knoten einen oder mehrere Hosts angibt, zu welchen eine Konfigurationsnachricht, welche für die bestimmte Regel erzeugt wird, übertragen wird; und wobei für eine bestimmte Regel ein realer Bereich für ein bestimmtes GroupingObject (320, 370, 394, 460) für den einen oder die mehreren dritter-Typ-Knoten einen oder mehrere Hosts angibt, zu welchen eine Konfigurationsnachricht, welche für das bestimmte GroupingObject erzeugt wird, übertragen wird.

9. Der zentrale Controller gemäß Anspruch 7, wobei der Graph basierend auf einem Baumgraphen erzeugt wird, welcher basierend auf Daten erzeugt wird, welche von einer Managementebene- (120) Anwendung bereitgestellt werden, welche in dem Computernetzwerk implementiert ist.

10. Der zentrale Controller gemäß Anspruch 7, ferner aufweisend:
Empfangen einer Angabe, dass die Graphdaten modifiziert wurden; und
als Reaktion auf das Empfangen der Angabe, dass die Graphdaten modifiziert wurden, Updaten der Mehrzahl von realen Bereichen für Knoten, welche gegenwärtig in dem Graphen enthalten sind.

11. Der zentrale Controller gemäß Anspruch 10, wobei die Graphdaten von einem oder mehreren Ereignissen modifiziert werden, welche ausgewählt sind aus der Gruppe, aufweisend: eine oder mehrere von Migrationen von einer oder mehreren Vorrichtungen in dem Netzwerk, Löschen von Vorrichtungen aus der Netzwerkkonfiguration, oder Hinzufügen neuer Vorrichtungen zu dem Netzwerk.

12. Der zentrale Controller gemäß Anspruch 7, wobei die Konfigurationsnachrichten die Regeln auf den Hosts konfigurieren.

13. Ein oder mehrere nicht transitorische computerlesbare Speichermedien, welche eine oder mehrere Computeranweisungen speichern, welche, wenn sie mittels eines oder mehrerer Prozessoren ausgeführt werden, den einen oder die mehreren Prozessoren veranlassen, die Schritte gemäß einem beliebigen der Ansprüche 1 bis 6 auszuführen.

## Revendications

1. Procédé implémenté par ordinateur de détermination de portées relatives à des dépendances de configuration de réseau, le procédé comprenant les étapes consistant à :
recevoir, par l'intermédiaire d'un dispositif de commande central (150) mis en œuvre dans un réseau informatique, des données de graphe qui représentent un graphe de dépendance à une règle présentant une pluralité de noeuds de graphe et une pluralité de liaisons de premier type entre la pluralité de noeuds de graphe et qui représentent des dépendances de configuration de réseau dans le réseau informatique ;
dans lequel les noeuds de graphe comprennent un ou plusieurs noeuds de premier type, un ou plusieurs noeuds de deuxième type, un ou plusieurs noeuds de troisième type, et un ensemble de noeuds hôtes ;
dans lequel les un ou plusieurs noeuds de premier type incluent un ou plusieurs noeuds de règle (140, 440, 450) qui correspondent à une ou plusieurs règles ;
dans lequel les un ou plusieurs noeuds de deuxième type incluent un ou plusieurs parmi : un noeud AppliedTo (310, 452), un noeud Source (360, 494) et un noeud Destination (392, 492), dans lequel un noeud AppliedTo (310, 452) pour une règle particulière définit des entités auxquelles la règle particulière s'applique ; dans lequel un noeud Source (360, 494) pour une règle particulière définit une ou plusieurs entités de source auxquelles la règle particulière s'applique ; et dans lequel un noeud Destination (392, 492) pour une règle particulière définit une ou plusieurs entités de destination auxquelles la règle particulière s'applique ;
dans lequel les un ou plusieurs noeuds de troisième type incluent un ou plusieurs noeuds GroupingObject (320, 370, 394, 460) qui correspondent à des GroupingObjects identifiés pour les une ou plusieurs règles, dans lequel un GroupingObject est une structure de données qui est utilisée pour stocker des identifiants des entités qui appartiennent au GroupingObject ;
déterminer une pluralité de liaisons de deuxième type entre un sous-ensemble des un ou plusieurs noeuds de troisième type, des un ou plusieurs noeuds de deuxième type et des un ou plusieurs noeuds de premier type, dans lequel le sous-ensemble inclut des noeuds de règle, des noeuds de source, des noeuds de destination et des noeuds GroupingObject qui sont directement connectés aux noeuds de source et/ou aux noeuds de destination ;
pour chaque liaison de premier type, de la pluralité de liaisons de premier type, supprimer une liaison de premier type entre deux noeuds connectés par la liaison de premier type si les deux noeuds sont également connectés par une liaison de deuxième type de la pluralité de liaisons de deuxième type ;
pour chaque noeud de deuxième type, des un ou plusieurs noeuds de deuxième type, supprimer un noeud de deuxième type et concaténer une liaison entrante pour le noeud de deuxième type avec une liaison sortante pour le noeud de deuxième type ;
déterminer le contenu d'une table de portée initiale qui inclut une portée initiale pour les un ou plusieurs noeuds de premier type et les un ou plusieurs noeuds de troisième type, dans lequel une portée initiale pour un noeud de premier type inclut un ou plusieurs identifiants d'hôte des noeuds hôtes qui peuvent être atteints dans le graphe de dépendance à une règle à partir du noeud de premier type en traversant la pluralité de liaisons de premier type dans une branche d'arbre enracinée au niveau du noeud de premier type ;
et une portée initiale pour un noeud de troisième type inclut un ou plusieurs identifiants d'hôte des noeuds hôtes qui sont accessibles dans le graphe de dépendance de Wile à partir du noeud de troisième type en traversant les liaisons de premier type dans une branche d'arbre enracinée au niveau du noeud de troisième type ;
déterminer une pluralité de portées réelles pour les un ou plusieurs noeuds de premier type et pour les un ou plusieurs noeuds de troisième type, dans lequel une portée réelle pour un noeud de premier type correspond à la portée initiale pour le noeud de premier type dans la table de portée initiale et dans lequel une portée réelle pour un noeud de troisième type correspond à la portée initiale pour le noeud de troisième type et à la portée initiale de l'un quelconque de la pluralité de noeuds de premier type qui sont trouvés en traversant la pluralité de liaisons de deuxième type à partir du troisième noeud ; et
transmettre des messages de configuration pour les un ou plusieurs noeuds de premier type et les un ou plusieurs noeuds de troisième type à des hôtes identifiés dans la pluralité de portées réelles.

2. Procédé mis en œuvre par ordinateur selon la revendication 1, dans lequel une portée réelle pour une règle particulière, des un ou plusieurs noeuds de premier type, indique un ou plusieurs hôtes auxquels un message de configuration généré pour la règle particulière est transmis ; et dans lequel, une portée réelle pour un GroupingObject particulier (320, 370, 394, 460), des un ou plusieurs noeuds de troisième type, indique un ou plusieurs hôtes auxquels un message de configuration généré pour le GroupingObject particulier (320, 370, 394, 460) est transmis.

3. Procédé mis en œuvre par ordinateur selon la revendication 1, dans lequel le graphe est généré sur la base d'un graphe arborescent créé sur la base de données fournies par une application de plan de gestion (120) mise en œuvre dans le réseau informatique.

4. Procédé mis en œuvre par ordinateur selon la revendication 1, comprenant en outre : une réception d'une indication selon laquelle les données de graphe ont été modifiées ; et en réponse à la réception de l'indication selon laquelle les données de graphe ont été modifiées, une mise à jour de la pluralité de portées réelles pour des noeuds actuellement inclus dans le graphe.

5. Procédé mis en œuvre par ordinateur selon la revendication 4, dans lequel les données de graphe sont modifiées par un ou plusieurs événements sélectionnés dans le groupe comprenant : une ou plusieurs migrations d'un ou plusieurs dispositifs dans le réseau, une suppression de dispositifs à partir de la configuration de réseau, ou un ajout de nouveaux dispositifs au réseau.

6. Procédé mis en œuvre par ordinateur selon la revendication 1, dans lequel les messages de configuration configurent les règles sur les hôtes.

7. Dispositif de commande central (150) mis en œuvre dans un réseau informatique et configuré pour mettre en œuvre des mécanismes de détermination de portées pour des dépendances de configuration de réseau, le dispositif de commande central (150) comprenant :
un ou plusieurs processeurs ;
une ou plusieurs unités de mémoire ; et
un ou plusieurs supports de stockage lisibles par ordinateur non transitoires stockant une ou plusieurs instructions informatiques qui, lorsqu'elles sont exécutées par les un ou plusieurs processeurs, amènent les un ou plusieurs processeurs à effectuer les étapes consistant à :
recevoir, par l'intermédiaire du dispositif de commande central (150) mis en œuvre dans le réseau informatique, des données de graphe qui représentent un graphe de dépendance à une règle présentant une pluralité de noeuds de graphe et une pluralité de liaisons de premier type entre la pluralité de noeuds de graphe et qui représentent des dépendances de configuration de réseau dans le réseau informatique ;
dans lequel les noeuds de graphe comprennent un ou plusieurs noeuds de premier type, un ou plusieurs noeuds de deuxième type, un ou plusieurs noeuds de troisième type, et un ensemble de noeuds hôtes ;
dans lequel les un ou plusieurs noeuds de premier type incluent un ou plusieurs noeuds de règle (140, 440, 450) qui correspondent à une ou plusieurs règles ;
dans lequel les un ou plusieurs noeuds de deuxième type incluent un ou plusieurs parmi : un noeud AppliedTo (310, 452), un noeud Source (360, 494) et un noeud Destination (392, 492), dans lequel un noeud AppliedTo (310, 452) pour une règle particulière définit des entités auxquelles la règle particulière s'applique ; dans lequel un noeud Source (360, 494) pour une règle particulière définit une ou plusieurs entités de source auxquelles la règle particulière s'applique ; et dans lequel un noeud Destination (392, 492) pour une règle particulière définit une ou plusieurs entités de destination auxquelles la règle particulière s'applique ;
dans lequel les un ou plusieurs noeuds de troisième type incluent un ou plusieurs noeuds GroupingObject (320, 370, 394, 460) qui correspondent à des GroupingObjects identifiés pour les une ou plusieurs règles, dans lequel un GroupingObject est une structure de données qui est utilisée pour stocker des identifiants des entités qui appartiennent au GroupingObject ;
déterminer une pluralité de liaisons de deuxième type entre un sous-ensemble des un ou plusieurs noeuds de troisième type, des un ou plusieurs noeuds de deuxième type et des un ou plusieurs noeuds de premier type, dans lequel le sous-ensemble inclut des noeuds de règle, des noeuds de source, des noeuds de destination et des noeuds GroupingObject qui sont directement connectés aux noeuds de source et/ou aux noeuds de destination ;
pour chaque liaison de premier type, de la pluralité de liaisons de premier type, supprimer une liaison de premier type entre deux noeuds connectés par la liaison de premier type si les deux noeuds sont également connectés par une liaison de deuxième type de la pluralité de liaisons de deuxième type ;
pour chaque noeud de deuxième type, des un ou plusieurs noeuds de deuxième type, supprimer un noeud de deuxième type et concaténer une liaison entrante pour le noeud de deuxième type avec une liaison sortante pour le noeud de deuxième type ;
déterminer le contenu d'une table de portée initiale qui inclut une portée initiale pour les un ou plusieurs noeuds de premier type et les un ou plusieurs noeuds de troisième type, dans lequel une portée initiale pour un noeud de premier type inclut un ou plusieurs identifiants d'hôte des noeuds hôtes qui peuvent être atteints dans le graphe de dépendance à une règle à partir du noeud de premier type en traversant la pluralité de liaisons de premier type dans une branche d'arbre enracinée au niveau du noeud de premier type et une portée initiale pour un noeud de troisième type inclut un ou plusieurs identifiants d'hôte des noeuds hôtes qui peuvent être atteints dans le graphe de dépendance à une règle à partir du noeud de troisième type en traversant les liaisons de premier type dans une branche d'arbre enracinée au niveau du noeud de troisième type ;
déterminer une pluralité de portées réelles pour les un ou plusieurs noeuds de premier type et pour les un ou plusieurs noeuds de troisième type, dans lequel une portée réelle pour un noeud de premier type correspond à la portée initiale pour le noeud de premier type dans la table de portée initiale et dans lequel une portée réelle pour un noeud de troisième type correspond à la portée initiale pour le noeud de troisième type et à la portée initiale de l'un quelconque de la pluralité de noeuds de premier type qui sont trouvés en traversant la pluralité de liaisons de deuxième type ; et
transmettre des messages de configuration pour les un ou plusieurs noeuds de premier type et les un ou plusieurs noeuds de troisième type à des hôtes identifiés dans la pluralité de portées réelles.

8. Dispositif de commande central selon la revendication 7, dans lequel une portée réelle pour une règle particulière, des un ou plusieurs noeuds de premier type, indique un ou plusieurs hôtes auxquels un message de configuration généré pour la règle particulière est transmis ; et dans lequel, pour une règle particulière, une portée réelle pour un GroupingObject particulier (320, 370, 394, 460), des un ou plusieurs noeuds de troisième type, indique un ou plusieurs hôtes auxquels un message de configuration généré pour le GroupingObject particulier est transmis.

9. Dispositif de commande central selon la revendication 7, dans lequel le graphe est généré sur la base d'un graphe arborescent créé sur la base de données fournies par une application de plan de gestion (120) mise en œuvre dans le réseau informatique.

10. Dispositif de commande central selon la revendication 7, comprenant en outre : une réception d'une indication selon laquelle les données de graphe ont été modifiées ; et en réponse à la réception de l'indication selon laquelle les données de graphe ont été modifiées, une mise à jour de la pluralité de portées réelles pour des noeuds actuellement inclus dans le graphe.

11. Dispositif de commande central selon la revendication 10, dans lequel les données de graphe sont modifiées par un ou plusieurs événements sélectionnés dans le groupe comprenant : une ou plusieurs migrations d'un ou plusieurs dispositifs dans le réseau, une suppression de dispositifs à partir de la configuration de réseau, ou un ajout de nouveaux dispositifs au réseau.

12. Dispositif de commande central selon la revendication 7, dans lequel les messages de configuration configurent les règles sur les hôtes.

13. Un ou plusieurs supports de stockage lisibles par ordinateur non transitoires stockant une ou plusieurs instructions informatiques qui, lorsqu'elles sont exécutées par un ou plusieurs processeurs, amènent les un ou plusieurs processeurs à effectuer les étapes de l'une quelconque des revendications 1 à 6.
